# EUROPÄISCHE PATENTANMELDUNG

(11) **EP 0 947 393 A1**
(43) Veröffentlichungstag der Anmeldung: **06.10.1999**
(21) Anmeldenummer: 99105139.2
(22) Anmeldetag: 26.03.1999
(51) Int. Cl.: B60R 21/16

(54) **Gassack-Rückhaltesystem**

(30) Priorität: 02.04.1998 DE 29806081 U
(71) Anmelder: TRW Occupant Restraint Systems GmbH & Co. KG, 73551 Alfdorf (DE)
(72) Erfinder: Fischer, Anton, 73579 Leinweiler (DE)
(74) Vertreter: Kitzhofer, Thomas, Dipl.-Ing.

(57) **Zusammenfassung**

Ein Gassack-Rückhaltesystem für einen Insassen eines Fahrzeugs hat einen schlauchförmigen Gassack (3) mit einer Längsachse (A), der bestrebt ist, sich im aufgeblasenen Zustand geradlinig zu erstrecken und der eine Außenwand (5) aufweist, und wenigstens ein an der Außenwand (5) angebrachtes, flächiges Abspannmittel (7), durch das der Gassack (3) am Fahrzeug befestigt ist. Das Abspannmittel (7) ist großflächig ausgebildet und an solchen Stellen der Außenwand (5) und am Fahrzeug angebracht, daß die Längsachse (A) des schlauchförmigen Gassacks (3) im aufgeblasenen Zustand gekrümmt verläuft und der Gassack (3) das Abspannmittel (7) aufspannt, so daß eine zusätzliche Rückhaltefläche gebildet ist.

## Beschreibung

Die Erfindung betrifft ein Gassack-Rückhaltesystem für einen Insassen eines Fahrzeugs, mit einem schlauchförmigen Gassack mit einer Längsachse, der bestrebt ist, sich in aufgeblasenem Zustand geradlinig zu erstrecken und der eine Außenwand aufweist, und mit wenigstens einem an der Außenwand angebrachten Abspannmittel, durch das der Gassack am Fahrzeug befestigt wird.

Ein derartiges Gassack-Rückhaltesystem ist aus der US 5 322 322 bereits bekannt. Dieses Rückhaltesystem ist als Kopf-Gassack ausgebildet. Der Kopf-Gassack ist schlauchförmig und erstreckt sich im aufgeblasenen Zustand von der A-Säule schräg aufwärts bis hinter die B-Säule. Dieser Gassack deckt jedoch nur einen relativ geringen Teil des Seitenfensters der Frontinsassen ab. Ein Netz, welches an dem oberen Rand des Gassacks angebracht ist, kann nur als kleine zusätzliche Rückhaltefläche dienen. Ferner ist die durch den stets linear verlaufenden Gassack auf das Netz aufgebrachte Spannkraft voraussichtlich gering, weshalb das Netz keine höheren seitlichen Kräfte aufnehmen kann, ohne stark nachzugeben.

Darüber hinaus ist es bekannt, jalousienartige Gassäcke vorzusehen, die sich von der A-Säule bis zur C-Säule erstrecken und dem Front- sowie dem Heckinsassen gleichermaßen seitlich Schutz bieten sollen. Die Herstellung dieser großflächigen Gassäcke ist relativ teuer. Zudem verläuft längs des Dachrahmens ein gasführendes Rohr, über das das Gas möglichst gleichmäßig in den Gassack einströmen soll. Das Gasvolumen zum Aufblasen dieses vorhangähnlichen Gassacks ist relativ groß, so daß extrem leistungsfähige Gasgeneratoren vorgesehen sein müssen, die eine ausreichend schnelle Befüllung sicherstellen.

Die Erfindung schafft ein Gassack-Rückhaltesystem, das einfach aufgebaut, kostengünstig zu fertigen ist und ein relativ geringes Gasvolumen trotz einer sehr großen zur Verfügung stehenden Rückhaltefläche erfordert. Das erfindungsgemäße Gassack-Rückhaltesystem zeichnet sich zudem durch eine hohe auf das Abspannmittel aufgebrachte Kraft aus, durch die das Abspannmittel eine stabile Lage erhält. Dies wird bei einem Gassack-Rückhaltesystem der eingangs genannten Art dadurch erreicht, daß das großflächig ausgebildete Abspannmittel an solchen Stellen der Außenwand und am Fahrzeug angebracht ist, daß der schlauchförmige Gassack im aufgeblasenen Zustand gekrümmt verläuft. Das Abspannmittel wird durch den gekrümmten Gassack aufgespannt und bildet eine zusätzliche Rückhaltefläche, die sich mit dem Gassack ergänzt. Der schlauchförmige Gassack wird also nicht zwischen seinen zwei axialen Enden verspannt und kann sich zwischen diesen axialen Enden linear erstrecken, sondern er wird ganz im Gegenteil durch die Abspannmittel gezwungen, einen gekrümmten Verlauf zu nehmen, was eine hohe Spannkraft ergibt. Dadurch verspannt sich der Gassack zwischen dem oder den Abspannmitteln und ist lagefixiert. Der Schlauch kann vor allem so gekrümmt werden, daß er alleine oder zusammen mit dem Abspannmittel Bereiche abschirmt, die durch einen ausschließlich linear verlaufenden Gassack nicht abgedeckt werden können, so daß der Gassack trotz kleinem Volumen die verletzungsgefährlichen Bereiche des Fahrzeugs (B-Säule oder Seitenscheibe in Kopfhöhe) abdecken kann.

Das Abspannmittel kann ein großflächiges Gewebestück oder ein Netz sein, an dem der Gassack an mehreren Stellen arretiert ist. Zur Arretierung kann der Gassack z.B. durch Schlitze im Gewebestück hindurch verlaufen.

Das erfindungsgemäße Gassack-Rückhaltesystem ist vorzugsweise ein Seitenaufprall-Rückhaltesystem und erstreckt sich vor einer oder mehreren Seitenscheiben.

Der Gassack ist insbesondere ein nahtlos gefertigter, vorzugsweise sogar endlos gefertigter Gewebeschlauch, der durch das Abspannmittel um mehr als 30°, vorzugsweise mehr als 60° umgelenkt wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Seitenansicht eines entfalteten erfindungsgemäßen Gassack-Rückhaltesystems, das als Seitenaufprall-Rückhaltesystem ausgebildet ist,
Fig. 2 eine Seitenansicht des entfalteten Abspannmittels nach Fig. 1, ohne daran angebrachten Gassack, und
Fig. 3 den nicht am Abspannmittel befestigten, aufgeblasenen Gassack, der in Fig. 1 gezeigt ist.

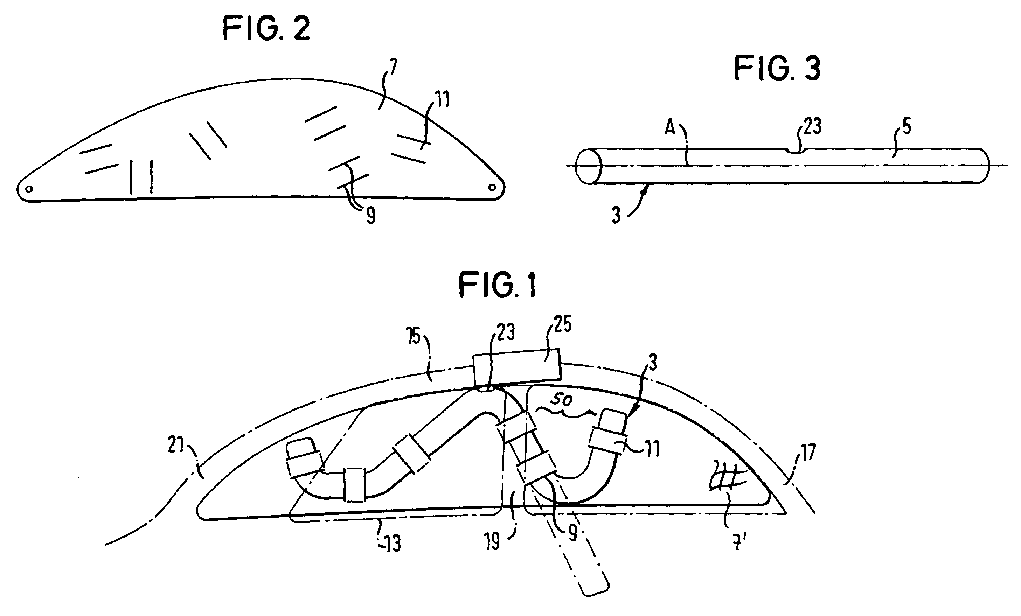

In Fig. 1 ist ein Gassack-Rückhaltesystem, genauer gesagt ein Seitenaufprall-Rückhaltesystem im entfalteten Zustand gezeigt. Das Rückhaltesystem besteht aus einem schlauchförmigen, nahtlos und endlos gefertigten Gassack 3, der auch in Fig. 3 zu sehen ist. Die Geometrie und die Webart der Außenwand 5 des Gassacks sind so gewählt, daß er, ohne an seiner Außenwand 5 an einem Teil befestigt zu sein, bestrebt ist, sich im aufgeblasenen Zustand geradlinig zu erstrecken, wie dies Fig. 3 zeigt.

Der Gassack 3 ist an einem Abspannmittel 7 in Form eines gezeigten großflächigen Gewebestücks oder eines Netzes 7' befestigt. Das Gewebestück hat hierzu zahlreiche Schlitze 9, durch die der Gassack 3 gezogen wird. Zusätzlich ist der Gassack mit seiner Außenwand an die durch jeweils ein Paar von parallelen Schlitzen gebildete Brücke 11 angenäht. Das Abspannmittel 7 ist in seiner Größe und Form dem gesamten Seitenfensterbereich des Fahrzeugs, in das es eingebaut wird, angepaßt. Es erstreckt sich im entfalteten Zustand gemäß Fig. 1 annähernd bis zum unteren Ende 13 der Seitenscheiben und bis zum Dachrahmen 15. Das Fahrzeug ist in diesem Bereich mit strichpunktierten Linien dargestellt. Ferner erstreckt sich das Abspannmittel 7 von der A-Säule 17 über die B-Säule 19 bis zur C-Säule 21, so daß es sowohl für den Front- als auch für den Heckinsassen Schutz bietet. Das Abspannmittel 7 ist an einigen Stellen an der A-Säule 17, dem Dachrahmen 15 und der C-Säule 21 befestigt. Der Gassack 3 ist so am Abspannmittel 7 befestigt, daß er sich nicht geradlinig erstrecken kann, sondern einen gekrümmten Verlauf nehmen muß. Im Bereich seines vorderen Endes, das der A-Säule 17 am nächsten ist, verläuft er steil abwärts, anschließend erstreckt er sich steil aufwärts, um den größten Teil der B-Säule 19 abzudecken und den Kopf des Insassen vor einem direkten Kontakt mit der B-Säule, insbesondere vor einem Kontakt mit dem Gurtumlenkbeschlag an der B-Säule, zu schützen. Es ergibt sich dadurch ein U- oder V-förmig gekrümmter Abschnitt 50, der so angeordnet ist, daß der Gassack 3 das Abspannmittel sowohl in Fahrzeuglängsrichtung als auch in vertikaler Richtung verspannt. Der Gassack B wird im Bereich 50 um mehr als 60°, nämlich etwa 110° gegenüber dem mit strichpunktierten Linien dargestellten linearen Gassack gekrümmt. Anschließend verläuft der Gassack 3 leicht schräg abwärts, um schließlich wieder seinem hinteren Ende zu steiler aufwärts zu verlaufen, wo er die C-Säule teilweise abdeckt. An seiner im entfalteten Zustand höchsten Stelle hat der Gassack eine Öffnung 23, die als Einblasöffnung dient. Über diese Öffnung 23 strömt das Gas eines benachbarten Gasgenerators 25 in den Gassack 3 ein.

Die Funktionsweise des erfindungsgemäßen Gassack-Rückhaltesystems wird im folgenden erläutert. Im zusammengefalteten Zustand sind Gassack 3 samt Abspannmittel 7 unter einer Verkleidung versteckt, die sich von der A-Säule 17 über den Dachrahmen 15 bis zur C-Säule 21 erstreckt. Bei einem Seitenaufprall bläst der Gasgenerator 25 den Gassack 3 auf. Durch den sich entfaltenden Gassack 3 wird die Abdeckung geöffnet. Der Gassack 3 schiebt sich nach unten und führt dabei das Abspannmittel 7 mit. Der Gassack 3 ist bestrebt, sich linear zu entfalten, was er aber aufgrund seiner Befestigung am Abspannmittel 7 nicht kann. Dadurch ergibt sich eine Abspannkraft, so daß das Abspannmittel 7 zwischen den Befestigungspunkten am Fahrzeug verspannt wird und wie ein Fangtuch den gesamten Seitenscheibenbereich zusammen mit dem Gassack 3 abdeckt. Die Entfaltung des Gassacks 3 erfolgt sehr schnell, da er ein relativ geringes Volumen hat. Ein Gasführungsrohr ist nicht notwendig. Da der Schlauch endlos und ohne Längsnaht gefertigt ist, ist er sehr stabil und kann hohen Öffnungsdrücken standhalten. Der Schlauch ist innenseitig beschichtet und ist, da er keine Naht aufweist, sehr gasdicht. Das großflächige Abspannmittel 7 benötigt keine Beschichtung und kann aus einem relativ preiswerten Gewebematerial sein. Der Gassack 3 wird insbesondere längs derjenigen Zonen des hinteren Seitenfensterbereichs geführt, mit denen der Kopf des Heckinsassen am wahrscheinlichsten in Kontakt kommen könnte.

## Patentansprüche

1. Gassack-Rückhaltesystem für einen Insassen eines Fahrzeugs, mit einem schlauchförmigen Gassack (3) mit einer Längsachse (A), der bestrebt ist, sich im aufgeblasenen Zustand geradlinig zu erstrecken und der eine Außenwand (5) aufweist, und mit wenigstens einem an der Außenwand (5) angebrachten, Abspannmittel (7), durch das der Gassack (3) am Fahrzeug befestigt ist, dadurch gekennzeichnet, daß das Abspannmittel (7) großflächig ausgebildet und an solchen Stellen der Außenwand (5) und am Fahrzeug angebracht ist, daß die Längsachse (A) des schlauchförmigen Gassacks (3) im aufgeblasenen Zustand gekrümmt verläuft und das Abspannmittel (7) durch den gekrümmten Gassack (3) aufgespannt wird und eine zusätzliche Rückhaltefläche bildet.

2. Gassack-Rückhaltesystem nach Anspruch 1, dadurch gekennzeichnet, daß das Abspannmittel (7) ein großflächiges Gewebestück oder ein Netz (7') ist, an dem der Gassack (3) an mehreren Stellen arretiert ist.

3. Gassack-Rückhaltesystem nach Anspruch 2, dadurch gekennzeichnet, daß das Abspannmittel (7) Schlitze (9) aufweist, die die Stellen zur Arretierung des Gassacks (3) bilden, und daß der Gassack (3) sich durch die Schlitze (9) im Abspannmittel (7) erstreckt.

4. Gassack-Rückhaltesystem nach einem der vorstehenden Ansprüche, dadurch gekennzeichnet, daß es als Seitenaufprall-Rückhaltesystem ausgebildet ist und sich im aufgeblasenen Zustand vor der oder den Seitenscheiben erstreckt.

5. Gassack-Rückhaltesystem nach Anspruch 4, dadurch gekennzeichnet, daß sich der Gassack (3) im aufgeblasenen Zustand von wenigstens seitlich des Kopfes des Frontinsassen bis wenigstens seitlich des Kopfes des Heckinsassen erstreckt.

6. Gassack-Rückhaltesystem nach Anspruch 5, dadurch gekennzeichnet, daß sich das Abspannmittel (7) den Seitenfensterbereich von annähernd des Dachrahmens (15) bis annähernd zum unteren Ende des Seitenfensters (13) und von annähernd der A-Säule (17) bis annähernd zur C-Säule (21) erstreckt.

7. Gassack-Rückhaltesystem nach einem der Ansprüche 4 bis 6, dadurch gekennzeichnet, daß der Gassack (3) einen Teil der B-Säule (19) in Kopfhöhe des Insassen abdeckt.

8. Gassack-Rückhaltesystem nach einem der Ansprüche 4 bis 7, dadurch gekennzeichnet, daß der Gassack (3) im Bereich der B-Säule (19) im wesentlichen vertikal verläuft und einen Großteil der B-Säule (19) verdeckt.

9. Gassack-Rückhaltesystem nach einem der Ansprüche 4 bis 8, dadurch gekennzeichnet, daß der Gassack (3) einen Großteil der C-Säule (21) verdeckt.

10. Gassack-Rückhaltesystem nach einem der Ansprüche 4 bis 9, dadurch gekennzeichnet, daß der Gassack (3) im aufgeblasenen Zustand im Bereich zwischen der B-Säule und der C-Säule (19, 21) schräg abwärts oder schräg aufwärts verläuft.

11. Gassack-Rückhaltesystem nach einem der vorstehenden Ansprüche, dadurch gekennzeichnet, daß der Gassack (3) ein nahtlos gefertigter Gewebeschlauch ist.

12. Gassack-Rückhaltesystem nach einem der vorstehenden Ansprüche, dadurch gekennzeichnet, daß der Gassack (3) wenigstens einen U- oder V-förmig gekrümmten Abschnitt (50) aufweist.

13. Gassack-Rückhaltesystem nach Anspruch 12, dadurch gekennzeichnet, daß der Gassack (3) um mehr als etwa 30° gegenüber dem ungekrümmten Gassack gekrümmt verläuft.

14. Gassack-Rückhaltesystem nach Anspruch 12 oder 13, dadurch gekennzeichnet, daß der Gassack (3) eine solche Krümmung aufweist, daß er das Abspannmittel (7) sowohl in Fahrzeuglängsrichtung als auch in vertikaler Richtung spannt.
